Europäisches Patentamt

European Patent Office

Office européen des brevets

(11) Veröffentlichungsnummer: **0 310 935**
**A2**

## (12) EUROPÄISCHE PATENTANMELDUNG

(21) Anmeldenummer: 88116040.2

(51) Int. Cl.⁴: **B32B 27/08**

(22) Anmeldetag: 29.09.88

(30) Priorität: 07.10.87 DE 3733821

(43) Veröffentlichungstag der Anmeldung:
12.04.89 Patentblatt 89/15

(84) Benannte Vertragsstaaten:
CH DE FR GB LI

(71) Anmelder: **Gaggenau-Werke Haus- und**
**Lufttechnik GmbH.**
**Eisenwerkstrasse 11**
**D-7560 Gaggenau(DE)**

(72) Erfinder: **Maisch, Hans**
**Kantstrasse 2**
**D-7560 Gaggenau(DE)**

(74) Vertreter: **Pfeifer, Hans-Peter, Dr.rer.nat.**
**Patentanwalt Nowackanlage 15**
**D-7500 Karlsruhe 1(DE)**

(54) **Sandwichplatte für Inneneinrichtungen und Verfahren zu ihrer Herstellung.**

(57) Sandwichplatte für Inneneinrichtungen mit hochbeanspruchbarer Oberfläche. Sie ist insbesondere für Arbeitsplatten 1 für Einbauküchen verwendbar. Eine Deckschicht 2 ist als vorgeformter Bauteil ausgebildet, der mit gehärtetem Kunstharz gebundenes Aluminiumtrihydroxid enthält. Eine Unterschicht 4 besteht aus einem zum Festschrauben geeigneten wasserdichten Kunststoffplattenmaterial. Dazwischen befindet sich eine Zwischenschicht 3 auf Basis eines Kunststoffschaummaterials.

Die Erfindung richtet sich auch auf ein Verfahren zur Herstellung einer solchen Sandwichplatte und auf ein Verfahren zur Herstellung eines Plattenverbundes aus solchen Sandwichplatten.

EP 0 310 935 A2

Fig. 1

## Sandwichplatte für Inneneinrichtungen und Verfahren zu ihrer Herstellung

Die Erfindung betrifft eine Sandwichplatte für Inneneinrichtungen mit hochbeanspruchbarer Oberfläche, welche eine der Plattenoberfläche benachbarte Deckschicht, eine der Plattenunterseite benachbarte Unterschicht und eine dazwischenliegende Zwischenschicht aufweist. Weiter richtet sich die Erfindung auf ein Verfahren zur Herstellung einer solchen Sandwichplatte und auf ein Verfahren zur Herstellung eines Plattenverbundes aus mehreren solchen Sandwichplatten.

Für Inneneinrichtungen werden häufig Platten benötigt, deren Oberflächen hohen Beanspruchungen standhalten. Sie sollen unempfindlich gegen chemische Einflüsse, insbesondere im Haushalt vorkommende Säuren und Alkalien und sehr widerstandsfähig gegen mechanische Beanspruchung sein. Außerdem wird Unempfindlichkeit gegen Flekken und leichte Abwaschbarkeit der Oberfläche verlangt.

Die erfindungsgemäßen Sandwichplatten können überall im Inneneinrichtungsbereich eingesetzt werden, wo diese Anforderungen von Bedeutung sind, insbesondere für Arbeitsplatten von Einbauküchen, für sonstige hochbeanspruchte Tischplatten oder für Wandpaneele.

Bekannte Sandwichplatten für solche Zwecke bestehen im allgemeinen aus einer tragenden Zwischenschicht aus Sperrholz oder Preßspan, welche mit dünnen, nichttragenden Deck- und Unterschichten, beispielsweise aus Resopal beschichtet sind. Diese bekannten Sandwichplatten sind weit verbreitet und verhältnismäßig kostengünstig, können in ihren Eigenschaften jedoch nicht vollständig befriedigen.

Um eine Sandwichplatte der eingangs bezeichneten Art mit verbesserten Gebrauchs- und Montageeigenschaften zur Verfügung zu stellen, schlägt die Erfindung vor, daß die Deckschicht als vorgeformter Bauteil ausgebildet ist, welcher mit gehärtetem Kunstharz gebundenes Aluminiumtrihydroxid $(Al(OH)_3)$ enthält, die Zwischenschicht als Füllschicht auf Basis eines Kunststoffschaummaterials ausgebildet ist und die Unterschicht ein zum Festschrauben geeignetes wasserdichtes Kunststoffplattenmaterial enthält.

Das erfindungsgemäße Herstellungsverfahren sieht vor, daß man zur Bildung der Deckschicht eine flüssige Gießmasse herstellt, welche ein flüssiges Kunstharz, Aluminiumtrihydroxidpulver und einen Härter enthält und diese Masse in einer Form gemäß der gewünschten Deckschichtform ausformt. Nach dem Aushärten der so erhaltenen Deckschicht positioniert man ein wasserdichtes Kunststoffplattenmaterial in einem der gewünschten Zwischenschichtstärke entsprechenden Abstand zu der Deckschicht und füllt den Zwischenraum zwischen Deckschicht und Kunststoffplatte durch Aufschäumen der schaumbildenden Kunststoffmasse.

Die Deckschicht hat hervorragende Oberflächeneigenschaften. Insbesondere ist sie kratzfest und chemisch beständig, so daß ihre der Plattenoberseite zugewandte Oberfläche unmittelbar die hoch beanspruchbare Oberfläche bilden kann. In Ausnahmefällen kann es jedoch auch zweckmäßig sein, die Deckschicht zusätzlich zu beschichten.

Die erfindungsgemäße Konstruktion besteht ausschließlich aus vollständig wasserbeständigen Materialien. Im Gegensatz zu den bekannten Platten auf Preßspanbasis ist es daher ausgeschlossen, daß eindringende Feuchtigkeit zum Aufquillen der Platte führt und diese unbrauchbar macht.

Ein weiterer besonderer Vorteil der Erfindung ist darin zu sehen, daß sich mehrere Sandwichplatten an ihren Kanten praktisch fugenlos verbinden lassen. Gemäß einem erfindungsgemäßen Verfahren zum Herstellen eines solchen Plattenverbundes werden die entsprechenden Kanten mit einer Klebemasse bestrichen, die die gleichen Komponenten enthält, wie die flüssige Gießmasse, aus der die Deckschicht hergestellt ist. Wenn man dann die zu verbindenden Platten während der Abbindezeit der Verbindungsmasse gegeneinander leicht verspannt, ergibt sich eine saubere und haltbare Verbindung zwischen beiden Platten. Der aus der Plattenoberfläche wulstartig hervorstehende Klebemassenüberstand läßt sich durch Schleifen so vollständig der Plattenoberfläche anpassen, daß die Verbindungsstelle praktisch nicht mehr sichtbar ist.

Diese fugenlose Verbindbarkeit der erfindungsgemäßen Sandwichplatten erlaubt es, bereits im Herstellerwerk eine Reihe von Standardgrößen von Platten herzustellen, die insgesamt ein Baukastensystem bilden, aus dem sich durch die beschriebene fugenlose Verbindung der Platten nahezu beliebige individuelle Formen herstellen lassen. Die Verbindung kann leicht in den Räumen durchgeführt werden, in denen die Inneneinrichtung benötigt wird. Dadurch lassen sich beispielsweise paßgenaue Arbeitsplatten für Einbauküchen oder Wandverkleidungen an Ort und Stelle herstellen, ohne daß der sonst übliche mit Schmutz und Lärm verbundene aufwendige Zuschnitt von großen Plattenstücken erforderlich ist.

Eine Deckschicht mit besonders guten mechanischen Eigenschaften erhält man, wenn man ein Polyesterharz zur Herstellung der Deckschicht verwendet.

Bevorzugt werden mindestens 40 % Aluminiumtrihydroxid und mindestens 20 % Kunstharz eingesetzt. Dadurch erhält man ein angnehm mattes optisches Erscheinungsbild der Deckschichtoberfläche und eine gute mechanische Festigkeit. Der zum Aushärten des Kunstharzes erforderliche Härter wird bevorzugt in einer Konzentration von höchstens 3 % zugesetzt

Die Eigenschaften der Deckschicht werden durch geringe Zusätze von Kobalt, welches vorzugsweise als Lösung eines Kobaltsalzes zugesetzt wird, positiv beeinflußt. Der Kobaltgehalt sollte unter 0,03 Gew.% liegen.

Für die Biegesteifigkeit der gesamten Plattenkonstruktion ist es vorteilhaft, wenn für die Zwischenschicht ein Schaummaterial verwendet wird, welches sowohl an der Deckschicht als auch an der Unterschicht haftet. Insbesondere hat sich Polyurethanschaum bewährt, wobei vorzugsweise eine verhältnismäßig hohe Dichte von mindestens etwa 50 kg/m³ zur Anwendung kommt.

An das Kunststoffplattenmaterial für die Unterschicht werden erhebliche Anforderungen gestellt, weil es in Verbindung mit der Schaumstoff-Zwischenschicht und der Deckschicht mitbestimmend ist für die mechanischen Eigenschaften der Sandwichplatte und zugleich zum Festschrauben geeignet sein muß. Es muß also einerseits ausreichend fest sein, darf aber andererseits nicht so hart oder spröde sein, daß es beim Einschrauben der für derartige Zwecke üblichen Schrauben mit selbstschneidenden Gewinden bricht. Als besonders geeignet hat sich Polystyrol erwiesen.

Die Erfindung wird im folgenden anhand eines in den Figuren schematisch dargestellten Ausführungsbeispiels näher erläutert. Es zeigen:

Fig. 1 eine erfindungsgemäße Sandwichplatte im Querschnitt, montiert auf einem Küchenschrank;

Fig. 2 die Verbindung zwischen zwei erfindungsgemäßen Sandwichplatten in einer Querschnittsdarstellung entlang der Schnittlinie II von Fig. 1.

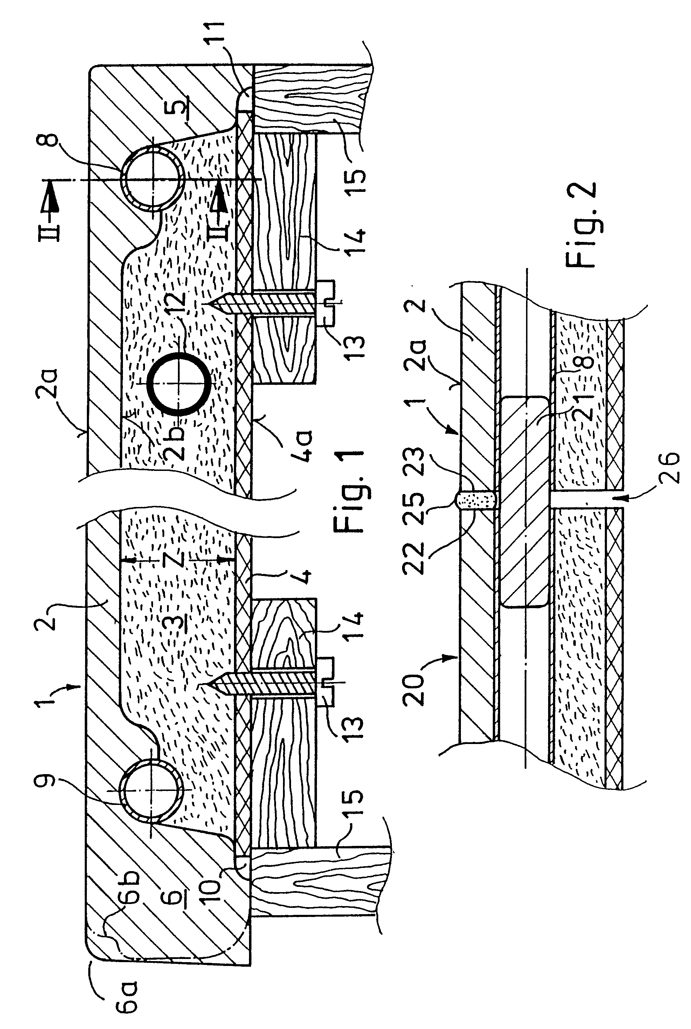

Die in Fig. 1 dargestellte Sandwichplatte ist als Einbauküchen-Arbeitsplatte 1 ausgebildet. Sie besteht im wesentlichen aus der Deckschicht 2, der Zwischenschicht 3 und der Unterschicht 4.

Die Deckschicht 2 ist an beiden in der Figur dargestellten Rändern auf die volle Plattenstärke verdickt, um eine Abschlußkante zu bilden. Die in der Figur rechte Abschlußkante 5 ist die Hinterkante der Arbeitsplatte, welche üblicherweise entlang der Küchenwand verläuft.

Die in der Figur linke Abschlußkante 6 wird im Lieferzustand durch die durchgezogene Begrenzungslinie 6a begrenzt. Der verdickte Bereich der Deckschicht ist hier so breit, daß er einen Formgestaltungsansatz bildet, von dem verschiedene dem Anwendungszweck entsprechende Abschlußkantenformen mit spanabhebenden Bearbeitungsverfahren formbar sind. In der Figur ist gestrichelt die Begrenzungslinie 6b eingezeichnet, die beispielhaft die Form einer möglichen Vorderkante einer Einbauküchen-Arbeitsplatte zeigt.

Parallel zu den Abschlußkanten 5 und 6 verlaufen Kunststoffrohre 8 und 9, die in die Deckschicht 2 eingelegt sind und zur Verbindung mehrerer Sandwichplatten dienen, wie anhand von Fig. 2 weiter unten näher erläutert wird.

Bei der Herstellung der Sandwichplatte wird zunächst die Deckschicht in dem beschriebenen Gießverfahren hergestellt. Danach wird die Deckschicht 2 mit der Oberseite 2a nach unten, also umgekehrt wie in der Figur dargestellt, angeordnet und auf die nunmehr nach oben zeigende Unterseite 2b der Deckschicht die schaumbildende Kunststoffmasse aufgebracht. Bevor die Kunststoffmasse aufschäumt, wird eine Polystyrol-Kunststoffplatte, die die Unterschicht 4 bildet, in Nuten 10 und 11 eingelegt, die entlang den Abschlußkanten 5, 6 verlaufen. Dadurch wird sie in einem der gewünschten Stärke Z der Zwischenschicht entsprechenden Abstand positioniert. Wenn nun die Kunststoffschaummasse aufgeschäumt wird, was in bekannter Weise durch eine chemische Reaktion oder auch durch Erhitzen eingeleitet werden kann, wird der Zwischenraum zwischen Deckschicht und Kunststoffplatte gefüllt und die Zwischenschicht 3 gebildet. Dabei kann ein beispielsweise aus Kunststoff bestehendes Leerrohr 12 in dem Zwischenraum angeordnet sein, das zur Aufnahme elektrischer Leitungen dienen kann. Die Unterseite 4a der Kunststoffplatte 4 kann mit einer in der Figur nicht dargestellten Markierung versehen sein, die den Verlauf des Leerrohres 12 bezeichnet.

Wie in der Figur zu erkennen ist, haben die Nuten 10 und 11 verhältnismäßig große Toleranzen. Dies ist ausreichend, weil sie nicht der exakten Positionierung der Unterschicht 4 dienen müssen. Diese wird vielmehr durch den Polyurethan-Kunststoffschaum der Zwischenschicht klebend fixiert und mit der Deckschicht 2 verbunden.

Schon mit einer verhältnismäßig geringen Stärke der Deckschicht von 5 - 15 mm ergibt sich eine sehr gute Stabilität. Bezogen auf die Gesamtstärke der Arbeitsplatte sind 10 % - 50 % Deckschichtstärke bevorzugt.

Fig. 1 zeigt auch die Oberkante eines Einbauküchenschrankes, auf dem die Arbeitsplatte montiert ist. Sie ist mit Hilfe von Schrauben 13 an Querhölzern 14 festgeschraubt, die mit den senkrechten Küchenschrankwänden 15 verbunden sind. Die Schraube 13 dringt in das Kunststoffplattenmaterial der Unterschicht 4 ein.

Der in Fig. 2 dargestellte Schnitt zeigt, wie zwei aneinanderstoßende erfindungsgemäße Sandwichplatten 1 und 20 mit ihren offenen Stoßkanten fugenlos miteinander verbunden werden können.

Hierzu wird in das Kunststoffrohr 8 ein passender Zapfenteil 21 gesteckt und dadurch sichergestellt, daß die Platten 1 und 20 genau miteinander fluchten. Die Stoßkanten 22 und 23 der Deckschichten 2 beider Platten 1 und 20 sind mit einer Masse bestrichen, die die gleichen Komponenten wie die Gießmasse enthält, aus der die Deckschicht hergestellt ist. Wie aus der Figur zu ersehen ist, entsteht beim Zusammendrücken der Platten ein wulstförmiger Klebemassenüberstand 25, der geringfügig über die Plattenoberfläche 2a hervorsteht. Dieser kann durch Abschleifen so ausgeglichen werden, daß die Stoßfuge 26 von der Plattenoberseite her nicht mehr zu erkennen ist.

Bevorzugt bilden die erfindungsgemäßen Sandwichplatten einen Bausatz gemäß der gleichzeitig eingereichten deutschen Patentanmeldung P der gleichen Anmelderin "Bausatz für eine aus plattenförmigen Bauelementen zusammengesetzte Baugruppe" (Anwaltsakte: A 1020), auf die hier vollinhaltlich Bezug genommen wird.

**Ansprüche**

1. Sandwichplatte für Inneneinrichtungen mit hochbeanspruchbarer Oberfläche, insbesondere Arbeitsplatte für Einbauküchen, umfassend eine der Plattenoberfläche benachbarte Deckschicht (2), eine der Plattenunterseite benachbarte Unterschicht (4) und eine dazwischenliegende Zwischenschicht (3), **dadurch gekennzeichnet, daß** die Deckschicht (2) als vorgeformter Bauteil ausgebildet ist, welcher mit gehärtetem Kunstharz gebundenes Aluminiumtrihydroxid enthält, die Zwischenschicht (3) als Füllschicht auf Basis eines Kunststoffschaummaterials ausgebildet ist und die Unterschicht (4) ein zum Festschrauben geeignetes wasserdichtes Kunststoffplattenmaterial enthält.

2. Sandwichplatte nach Anspruch 1, **dadurch gekennzeichnet, daß** das Kunstharz ein Polyesterharz ist.

3. Sandwichplatte nach Anspruch 1, **dadurch gekennzeichnet, daß** die Deckschicht (2) mindestens 40 % Aluminiumtrihydroxid und mindestens 20 % Kunstharz enthält.

4. Sandwichplatte nach Anspruch 1, **dadurch gekennzeichnet, daß** die Deckschicht (2) höchstens 3 % Härter enthält.

5. Sandwichplatte nach Anspruch 1, **dadurch gekennzeichnet, daß** die Deckschicht (2) Kobalt enthält.

6. Sandwichplatte nach Anspruch 1, **dadurch gekennzeichnet, daß** das Kunststoffschaummaterial der Zwischenschicht (3) Polyurethanschaum ist.

7. Sandwichplatte nach Anspruch 6, **dadurch gekennzeichnet, daß** der Polyurethanschaum eine Dichte von mehr als 50 kg/m$^3$ hat.

8. Sandwichplatte nach Anspruch 1, **dadurch gekennzeichnet, daß** das Kunststoffplattenmaterial der Unterschicht aus Polystyrol besteht.

9. Sandwichplatte nach Anspruch 1, **dadurch gekennzeichnet, daß** die Deckschicht (2) zwischen 5 mm und 15 mm stark ist.

10. Sandwichplatte nach Anspruch 1, **dadurch gekennzeichnet, daß** die Stärke der Deckschicht (2) zwischen 10 % und 50 % der Arbeitsplattenstärke beträgt.

11. Sandwichplatte nach Anspruch 1, **dadurch gekennzeichnet, daß** die Deckschicht (2) an mindestens einem Rand auf die volle Plattenstärke verdickt ist, um eine Abschlußkante (5,6) zu bilden.

12. Sandwichplatte nach Anspruch 10, **dadurch gekennzeichnet, daß** der verdickte Bereich der Deckschicht (2) so breit ist, daß er einen Formgestaltungsansatz bildet, aus dem verschiedene Abschlußkantenformen (6b) spanabhebend formbar sind.

13. Sandwichplatte nach Anspruch 1, **dadurch gekennzeichnet, daß** in der Füllschicht mindestens ein Leerrohr (12) zur Aufnahme elektrischer Leitungen vorgesehen ist.

14. Verfahren zur Herstellung von Sandwichplatten nach Anspruch 1, **dadurch gekennzeichnet, daß man**
zur Bildung der Deckschicht eine flüssige Gießmasse herstellt, welche ein flüssiges Kunstharz, Aluminiumtrihydroxidpulver und Härter enthält, diese in einer Form gemäß der gewünschten Deckschichtform ausformt und aushärten läßt,
in einem der gewünschten Zwischenschichtstärke entsprechenden Abstand von der Unterseite der Deckschicht ein wasserdichtes Kunststoffplattenmaterial positioniert und
den Zwischenraum zwischen Deckschicht und Kunststoffplatte durch Aufschäumen einer schaumbildenden Kunststoffmasse füllt.

15. Verfahren zum Herstellen eines Plattenverbundes aus nebeneinander angeordneten, mit parallel zueinander verlaufenden Stoßkanten aneinanderstoßenden Sandwichplatten nach Anspruch 1, **dadurch gekennzeichnet, daß** man mindestens eine der aneinanderstoßenden Kanten der Deckschicht mit einer Klebemasse, die ein flüssiges Kunstharz, Aluminiumtrihydroxidpulver und Härter enthält, bestreicht, die Stoßkanten zusammenfügt und gegeneinander fixiert, die Klebemasse aushärten läßt und den aus der Plattenoberfläche herausragenden Klebemassenüberstand abschleift.

Fig. 1

Fig. 2

EP 0 310 935 A2

EU 1024